# EUROPEAN PATENT APPLICATION

(11) **EP 3 281 981 A1**
(43) Date of publication of application: **14.02.2018**
(21) Application number: 16776575.9
(22) Date of filing: 06.04.2016
(51) Int. Cl.: C08L 53/02, C08K 3/22

(54) **RESIN COMPOSITION AND USE OF SAME**

(30) Priority: 09.04.2015 JP 2015080034
(71) Applicant: Zeon Corporation, Tokyo 100-8246 (JP)
(72) Inventor: KAMIMURA, Haruki, Tokyo 100-8246 (JP); CHIBA, Daido, Tokyo 100-8246 (JP); KOHARA, Teiji, Tokyo 100-8246 (JP)
(74) Representative: Vos, Derk
(86) International application number: PCT/JP2016/061287
(87) International publication number: WO 2016/163409

(57) **Abstract**

The present invention is a laminated glass [H] which uses, as an intermediate film, a sheet [G] that is formed from a resin composition [F] that is prepared by blending a total amount of 0.001 to 2.0 parts by weight of a metal oxide particulate and/or a near infrared-absorbing pigment having a function of shielding infrared ray, into 100 parts by weight of a specific hydrogenated block copolymer [D] and/or a modified hydrogenated block copolymer [E]. The present invention provides a laminated glass which has excellent infrared shielding function, moisture resistance and heat resistance.

## Description

### Technical Field

The present invention relates to a resin composition suitable as an intermediate film-forming material for a laminated glass which is excellent in heat insulating function, moisture resistance and durability, a resin sheet including the resin composition, and a laminated glass using the resin sheet as an intermediate film.

### Background Art

A laminated glass having a heat ray-shielding function is useful as a window glass for an automobile, a building or the like, because it prevents incidence of heat ray, enhances a cooling effect in summer, and is also effective for energy saving (Patent Literatures 1 to 3).

Examples of the laminated glass having a heat ray-shielding function include (a) a glass having a structure that an intermediate film containing a metal particulate reflecting infrared ray, a metal oxide particulate and/or a near infrared-absorbing pigment is inserted between glass plates; (b) a glass having a structure that a multilayer coating of a metal/metal oxide is provided on a surface of a glass plate as a heat ray-reflecting film by vapor deposition, sputtering or the like; (c) a glass having a structure that a transparent film having a multilayer coating of a metal/metal oxide as a heat ray-reflecting film is inserted between glass plates via an intermediate film; and the like.

Among them, a method of forming the heat ray-reflecting film of (b) or (c) on a substrate by vapor deposition, sputtering or the like is not industrially advantageous because its product becomes expensive. On the other hand, a method using the intermediate film of (a) having the heat ray-shielding function is excellent in mass productivity and industrially advantageous in that a resin intermediate film can be continuously produced by a melt extrusion method or the like and a laminated glass using the intermediate film can also be produced by an ordinary process for producing a laminated glass.

As an invention related to the method (a), Patent Literature 4 discloses an intermediate film for a laminated glass prepared by compounding a metal oxide particulate having a heat ray-shielding function into a polyvinyl acetal resin (hereinafter referred to as "PVB" in some cases). In addition, Patent Literatures 5 and 6 disclose intermediate films for laminated glasses prepared by blending a pigment absorbing light at a near-infrared region into a PVB.

However, for the intermediate films described in these literatures, PVBs having high hygroscopicity were used, and the laminated glass to which this intermediate film was bonded did not necessarily have sufficient durability because water permeated from the end portion of the glass, the peripheral portion was likely to whiten, and an adhesiveness of the peripheral portion with the glass was decreased, when used under an environment at a high temperature and high humidity or used for a long time. In addition, the intermediate film using a PVB also had a problem in use because a moisture content in an intermediate film must be strictly controlled before bonded to the glass in order to control its adhesiveness with the glass (Non-Patent Literature 1).

In addition, Patent Literature 7 discloses a laminated glass which can maintain a heat insulation property for a long time and has excellent durability by using an intermediate film including a resin composition in which a near infrared-absorbing organic pigment is dispersed in a thermoplastic resin having a low content of hydroxyl groups.

However, in some cases, even the intermediate film including a resin composition in which the organic pigment was dispersed in a PVB, a (meth)acrylic resin, an ethylene/vinyl acetate copolymer resin or an ionomer resin disclosed in this patent literature, did not necessarily have sufficient durability.

### Citation List

### Patent Literature

Patent Literature 1: JP-A-56-32352 (US 2013135142 A1)
Patent Literature 2: JP-A-63-134232 (US 4859532 A)
Patent Literature 3: JP-A-7-157344
Patent Literature 4: JP-A-2001-302288
Patent Literature 5: JP-A-2012-66954
Patent Literature 6: JP-A-2013-209234
Patent Literature 7: JP-A-2011-42552

### Non Patent Literature

Non Patent Literature 1: Monthly report of Japan Chemical Industry Association, Yasuyuki Fujisaki, 35 (10), 28 (1982)

### Summary of Invention

### Technical Problem

The present invention has been made under such circumstances of the prior art, and objects of the present invention is to solve the problems of the laminated glass having the conventional heat ray-shielding function i.e. problems in moisture resistance and durability, and to provide a laminated glass having excellent properties also in practical use.

### Solution to Problem

As a result of intensive studies in order to achieve the above objects, the present inventors have found that a laminated glass produced by using, as an intermediate film, a sheet including a resin composition prepared by blending a particular amount of a metal oxide particulate having an infrared-shielding function and/or a near infrared-absorbing pigment into a particular hydrogenated block copolymer (hereinafter referred to as "hydrogenated block copolymer [D]" in some cases) and/or a modified hydrogenated block copolymer obtained by introducing an alkoxysilyl group into the particular hydrogenated block copolymer (hereinafter referred to as "modified hydrogenated block copolymer [E]" in some cases), is excellent in heat ray-reflecting function, moisture resistance and durability, and have completed the present invention.

Thus, one aspect of the invention provides a resin composition of any one of (1) to (3), a sheet of (4) including the resin composition, and a laminated glass of (5) using the sheet as an intermediate film, described below.
1. A resin composition which is prepared by blending a total amount of 0.001 to 2.0 parts by weight of a metal oxide particulate and/or a near infrared-absorbing pigment having a function of shielding infrared ray at any region within a wavelength range of 800 to 2,000 nm based on 100 parts by weight of a hydrogenated block copolymer [D] and/or a modified hydrogenated block copolymer [E],
   wherein the hydrogenated block copolymer [D] is obtained by hydrogenating 90% or more of carbon-carbon unsaturated bonds on a main chain and side chains and all unsaturated bonds of carbon-carbon unsaturated bonds on aromatic rings in a block copolymer [C] which is containing two or more polymer blocks(hereinafter referred to as "polymer block [A]" in some cases) mainly containing a structural unit (hereinafter referred to as "structural unit [a]" in some cases) derived from an aromatic vinyl compound and one or more polymer blocks (hereinafter referred to as "polymer block [B]" in some cases) mainly containing a structural unit ((hereinafter referred to as "structural unit [b] in some cases) derived from an acyclic conjugated diene compound, a ratio of w[a] to w[b] (w[a]:w[b]) is 30:70 to 60:40 when a weight fraction of a total amount of a structural unit [a] accounting for the block copolymer [C] is defined as w[a] and a weight fraction of a total amount of a structural unit [b] accounting for the block copolymer [C] is defined as w[b], and
   the modified hydrogenated block copolymer [E] is obtained by introducing an alkoxysilyl group into the hydrogenated block copolymer [D].
(2) The resin composition according to (1), wherein the metal oxide particulate having a function of shielding infrared ray is at least one selected from a group consisting of tin oxide, aluminum-doped tin oxide, indium-doped tin oxide, antimony-doped tin oxide, zinc oxide, aluminum-doped zinc oxide, indium-doped zinc oxide, gallium-doped zinc oxide, tin-doped zinc oxide, silicon-doped zinc oxide, titanium oxide, niobium-doped titanium oxide, tungsten oxide, sodium-doped tungsten oxide, cesium-doped tungsten oxide, thallium-doped tungsten oxide, rubidium-doped tungsten oxide, indium oxide and tin-doped indium oxide.
(3) The resin composition according to (1) or (2), wherein the near infrared-absorbing pigment having the function of shielding infrared ray is at least one near infrared-absorbing pigments selected from a group consisting of a phthalocyanine compound, a naphthalocyanine compound, an immonium compound, a diimmonium compound, a polymethine compound, a diphenylmethane compound, an anthraquinone compound, a pentadiene compound, an azomethine compound and lanthanum hexaboride.
(4) A laminated glass which is prepared by inserting a resin sheet including the resin composition according to any one of (1) to (3) between glass plates and adhering laminates including the glass plates and the resin sheet to integrate them, which has a region having a light transmittance of 50% or lower within a wavelength range of 800 to 2,000 nm, and a light transmittance at 550 nm is 60% or higher.

### Advantageous Effects of Invention

One aspect of the invention provides a resin composition suitable as an intermediate film-forming material for a laminated glass which is excellent in heat insulating function, moisture resistance and durability, a resin sheet including the resin composition, and a laminated glass using the resin sheet as an intermediate film.

### Description of Embodiments

The resin composition according to one embodiment of the invention (hereinafter referred to as "resin composition [F]" in some cases) is characteristically prepared by blending a particular amount of an infrared-shielding metal oxide particulate and/or a near infrared-absorbing pigment into the particular hydrogenated block copolymer [D] and/or the modified hydrogenated block copolymer [E].

In addition, the resin sheet (hereinafter referred to as "resin sheet [G]" in some cases) formed with the resin composition [F] according to one embodiment of the invention characteristically has a light transmittance at a visible light region (at approximately 360 to 800 nm) and has a function of shielding light at an infrared region (at 800 to 2,000 nm).

Furthermore, a laminated glass (hereinafter referred to as "laminated glass [H]" in some cases) obtained by inserting the resin sheet [G] according to one embodiment of the invention as an intermediate film between glass plates is characteristically transparent and has a heat insulating function.

### 1. Block copolymer [C}

The block copolymer [C] used in the present invention is a polymer containing at least two polymer blocks [A] and at least one polymer block [B]. The block copolymer [C] is a precursor of the hydrogenated block copolymer [D].

### (Polymer block [A])

The polymer block [A] is a polymer block mainly containing a structural unit [a] derived from an aromatic vinyl compound. The content of the structural unit [a] in the polymer block [A] is normally 90 wt% or more, preferably 95 wt% or more, and more preferably 99 wt% or more. If the content of the structural unit [a] in the polymer block [A] is too small, the heat resistance of the resin composition [F] of the present invention possibly decreases.

The polymer block [A] may contain components other than the structural unit [a]. Examples of the other components include a structural unit [b] derived from an acyclic conjugated diene and/or a structural unit derived from another vinyl compound (hereinafter referred to as "structural unit [j]" in some cases). The content of the unit is normally 10 wt% or less, preferably 5 wt% or less, and more preferably 1 wt% or less based on the polymer block [A]. If the content of the structural unit [b] and/or the structural unit [j] in the polymer block [A] is too large, the heat resistance of the resin composition [F] according to one embodiment of the invention possibly decreases.

Each of the plural polymer blocks [A] contained in the block copolymer [C] may be the same as or different from each other as long as they meet the above range.

### (Polymer block [B])

The polymer block [B] is a polymer block mainly containing a structural unit [b] derived from an acyclic conjugated diene compound. The content of the structural unit [b] in the polymer block [B] is normally 70 wt% or more, preferably 80 wt% or more, and more preferably 90 wt% or more. When the content of the structural unit [b] in the polymer block [B] is within the above range, the resin composition [F] according to one embodiment of the invention is preferred because the resin composition [F] has flexibility and the laminated glass [H] using the formed sheet [G] as an intermediate film gains thermal shock resistance and piercing resistance.

The polymer block [B] may contain components other than the structural unit [b]. Examples of the other components include a structural unit [a] derived from an aromatic vinyl compound and/or a structural unit [j] derived from another vinyl compound. The content of the unit is normally 30 wt% or less, preferably 20 wt% or less, and more preferably 10 wt% or less based on the polymer block [B]. If the content of the structural unit [a] and/or the structural unit [j] in the polymer block [B] is too large, flexibility of the resin composition [F] according to one embodiment of the invention is impaired and the thermal shock resistance and the piercing resistance of the laminated glass [H] is impaired when using the formed sheet [G] as an intermediate film, and thus the content is not preferred.

When the block copolymer [C] has a plurality of polymer blocks [B], each of the polymer blocks [B] may be the same as or different from each other.

Examples of the aromatic vinyl compound include styrene; styrenes having an alkyl group having 1 to 6 carbon atoms as a substituent, such as α-methylstyrene, 2-methylstyrene, 3-methylstyrene, 4-methylstyrene, 2,4-diisopropylstyrene, 2,4-dimethylstyrene, 4-t-butylstyrene, 5-t-butyl-2-methylstyrene; styrenes having an alkoxy group having 1 to 6 carbon atoms as a substituent, such as 4-methoxystyrene; styrenes having an aryl group as a substituent, such as 4-phenylstyrene; vinylnaphthalenes such as 1-vinylnaphthalene and 2-vinylnaphthalene; and the like. Above all, the aromatic vinyl compounds containing no polar group, such as the styrene, and the styrenes having an alkyl group having 1 to 6 carbon atoms as a substituent are preferred from the viewpoint of hygroscopicity, and styrene is particularly preferred because it is industrially available with ease.

Examples of the acyclic conjugated diene-based compound include 1,3-butadiene, isoprene, 2,3-dimethyl-1,3-butadiene, 1,3-pentadiene and the like, and the acyclic conjugated diene-based compound containing no polar group is preferred from the viewpoint of hygroscopicity, and the 1,3-butadiene and isoprene are particularly preferred because they are industrially available with ease.

Examples of other vinyl compounds include an acyclic vinyl compound, a cyclic vinyl compound, an unsaturated cyclic acid anhydride, an unsaturated imide compound and the like. These compounds may have a substituent such as a nitrile group, an alkoxycarbonyl group, a hydroxycarbonyl group and a halogen atom. Above all, a group having no polar group such as: an acyclic olefin having 2 to 20 carbon atoms such as ethylene, propylene, 1-butene, 1-pentene, 1-hexene, 1-heptene, 1-octene, 1-nonene, 1-decene, 1-dodecene, 1-eicosen, 4-methyl-1-pentene and 4,6-dimethyl-1-heptene; a cycloolefin having 5 to 20 carbon atoms such as vinylcyclohexane and norbornene; a cyclodiene compound such as 1,3-cyclohexadiene and norbornadiene; and the like is preferred from the viewpoint of hygroscopicity.

### (Block copolymer [C])

The block copolymer [C] is a polymer containing at least two polymer blocks [A] and at least one polymer block [B].

The number of the polymer blocks [A] in the block copolymer [C] is normally 4 or less, preferably 3 or less, and more preferably 2, and the number of the polymer blocks [B] in the block copolymer [C] is normally 3 or less, preferably 2 or less, and more preferably 1.

When the numbers of the polymer blocks [A] and the polymer blocks [B] in the block copolymer [C] is larger, phase separation between a hydrogenated copolymer block derived from the polymer block (A) (hereinafter referred to as "hydrogenated polymer block [Aₕ]" in some cases) and a hydrogenated polymer block derived from the polymer block (B) (Hereinafter referred to as "hydrogenated polymer block [Bₕ]" in some cases) is indistinct in the hydrogenated block copolymer [D] obtained by hydrogenating the block copolymer [C], a glass transition temperature on the high temperature side based on the hydrogenated polymer block [Aₕ] (hereinafter referred to as "Tg₂" in some cases) decreases, and thus the heat resistance of the resin composition [F] according to one embodiment of the invention possibly decreases.

The block form of the block copolymer [C] is not particularly limited, and it may be a chain-type block or a radial-type block, but a chain-type block is preferred because of excellent mechanical strength.

The most preferred form of the block copolymer [C] is a triblock copolymer in which the polymer blocks [A] bind to both ends of the polymer block [B] ([A]-[B]-[A]), and a pentablock copolymer in which the polymer blocks [B] bind to both ends of the polymer block [A] and furthermore the polymer blocks [A] respectively bind to the other ends of the both polymer blocks [B] ([A]-[B]-[A]-[B]-[A]).

In addition, when the weight fraction of the total amount of the structural units [a] in the block copolymer [C] accounting for the block copolymer [C] is defined as w[a] and the weight fraction of the total amount of the structural units [b] accounting for the block copolymer [C] is defined as w[b], a ratio of the w[a] to the w[b] (w[a]:w[b]) is 30:70 to 60:40, preferably 35:65 to 55:45, and more preferably 40:60 to 50:50. If the w[a] is too high, the heat resistance of the resin composition [F] related to the present invention increases, but in a case of a laminated glass using an intermediate film having low flexibility and including the resin composition [F], the glass is likely to be broken by low temperature thermal shock. On the other hand, when the w[a] is too low, the heat resistance of the intermediate film including the resin composition [F] possibly decreases.

The molecular weight of the block copolymer [C] refers to a weight average molecular weight (Mw) in terms of polystyrene determined by gel permeation chromatography (GPC) using tetrahydrofuran (THF) as a solvent, and is normally 40,000 to 200,000, preferably 50,000 to 150,000, and more preferably 60,000 to 100,000.

In addition, the molecular weight distribution (Mw/Mn) of the block copolymer [C] is preferably 3 or less, more preferably 2 or less, and particularly preferably 1.5 or less. When the Mw and the Mw/Mn are within the above range, the resin composition [F] using the hydrogenated block copolymer [D] obtained by hydrogenating the block copolymer [C], and/or the sheet [G] including the [F] have preferable heat resistance and mechanical strength.

A method for producing the block copolymer [C] is not particularly limited, and a known method can be adopted. For example, it can be obtained by: a method in which a monomer mixture (a) mainly containing an aromatic vinyl compound (the content of the aromatic vinyl compound is normally 90 wt% or more, preferably 95 wt% or more, and more preferably 99 wt% or more. The same applies hereinafter.) and a monomer mixture (b) mainly containing an acyclic conjugated diene-based compound (the content of the acyclic conjugated diene compound is normally 70 wt% or more, preferably 80 wt% or more, and more preferably 90 wt% or more. The same applies hereinafter.) are alternately polymerized by a process such as living anion polymerization; a method in which the monomer mixture (a) mainly containing an aromatic vinyl compound and the monomer mixture (b) mainly containing an acyclic conjugated diene-based compound are sequentially polymerized, and then the ends of the polymer blocks [B] are coupled with each other by a coupling agent; and the like.

Examples of the coupling agent include a halogen compound such as dimethyldichlorosilane, methyltrichlorosilane, butyltrichlorosilane, tetrachlorosilane, dibromoethane and bis(trichlorosilyl)ethane; an epoxy compound such as epoxidized soybean oil; a diester compound of a dicarboxylic acid such as diethyl adipate, dimethyl adipate, dimethyl terephthalate and diethyl terephthalate.

### 2. Hydrogenated block copolymer [D]

The hydrogenated block copolymer [D] used in the present invention is prepared by hydrogenating carbon-carbon unsaturated bonds on the main chain and the side chains of the block copolymer [C] and a carbon-carbon unsaturated bond on the aromatic ring. Its hydrogenation ratio is normally 90% or higher, preferably 97% or higher, and more preferably 99% or higher. The higher the hydrogenation ratio is, the better the weather resistance, heat resistance and transparency of the formed article are.

In the hydrogenated block copolymer [D] used in the present invention, the hydrogenation ratio of the carbon-carbon unsaturated bonds on the main chain and the side chains of the block copolymer [C] is normally 90% or higher, preferably 97% or higher, and more preferably 99% or higher. In addition, the hydrogenation ratio of the carbon-carbon unsaturated bonds on the aromatic ring is normally 90% or higher, preferably 97% or higher, more preferably 99% or higher.

The hydrogenation ratio of the hydrogenated block copolymer [D] can be determined by ¹H-NMR measurement of the hydrogenated block copolymer [D].

The hydrogenation method, the reaction form and the like of the unsaturated bond are not particularly limited and may comply with a known method, but a hydrogenation method in which the hydrogenation ratio can be increased and the polymer chain-cleaving reaction is reduced; is preferred. Examples of such a hydrogenation method include methods described in WO2011/096389 brochure, WO2012/043708 brochure and the like.

After completion of the hydrogenation reaction, the hydrogenation catalyst, or the hydrogenation catalyst and the polymerization catalyst are removed from the reaction solution, and then the hydrogenated block copolymer [D] can be collected from the resulting solution. The form of the collected hydrogenated block copolymer [D] is not limited, but the copolymer is normally formed in a form of pellet, into which subsequently additives can be blended and an alkoxysilyl group can be introduced.

The molecular weight of the hydrogenated block copolymer [D] refers to a weight average molecular weight (Mw) in terms of polystyrene determined by GPC using THF as a solvent, and is normally 40,000 to 200,000, preferably 50,000 to 150,000, and more preferably 60,000 to 100,000. In addition, the molecular weight distribution (Mw/Mn) of the hydrogenated block copolymer [D] is preferably 3 or less, more preferably 2 or less, and particularly preferably 1.5 or less. When the Mw and the Mw/Mn are within the above range, the resin composition [F] according to one embodiment of the invention has improved heat resistance and mechanical strength.

### 3. Modified hydrogenated block copolymer [E]

In the modified hydrogenated block copolymer [E] usable in the present invention, an alkoxysilyl group is introduced by reacting an ethylenically unsaturated silane compound with the hydrogenated block copolymer [D] in the presence of an organic peroxide. The alkoxysilyl group is introduced into the hydrogenated block copolymer [D], so that strong adhesiveness with glass and metal can be provided.

Examples of the alkoxysilyl group include a tri(alkoxy having 1 to 6 carbon atoms)silyl group such as a trimethoxysilyl group and a triethoxysilyl group; an (alkyl having 1 to 20 carbon atoms) di(alkoxy having 1 to 6 carbon atoms)silyl group such as a methyldimethoxysilyl group, a methyldiethoxysilyl group, an ethyldimethoxysilyl group, an ethyldiethoxysilyl group, a propyldimethoxysilyl group, a propyldiethoxysilyl group; an (aryl)di(alkoxy having 1 to 6 carbon atoms)silyl group such as a phenyldimethoxysilyl group, a phenyldiethoxysilyl group; and the like. In addition, the alkoxysilyl group may be bound to the hydrogenated block copolymer [D] via a divalent organic group such as an alkylene group having 1 to 20 carbon atoms and an alkyleneoxycarbonylalkylene group having 2 to 20 carbon atoms.

The amount of the alkoxysilyl group introduced into the hydrogenated block copolymer [D] is normally 0.1 to 10 parts by weight, preferably from 0.2 to 5 parts by weight, and more preferably 0.3 to 3 parts by weight based on 100 parts by weight of the hydrogenated block copolymer [D].

If the amount of the introduced alkoxysilyl group is too large, crosslinking of the alkoxysilyl groups decomposed by a tiny amount of water or the like proceeds before the resulting modified hydrogenated block copolymer [E] is melt-formed into a desired shape, and problems such as gelation and decreased formability due to reduced flowability during melting are likely to occur. On the other hand, if the amount of the introduced alkoxysilyl group is too small, a trouble of not achieving sufficient adhesiveness for adhering the intermediate film with the glass plate is likely to occur. The introduction of the alkoxysilyl group can be confirmed by IR spectrum. In addition, its introduction amount can be calculated by ¹H-NMR spectrum.

The ethylenically unsaturated silane compound to be used is not particularly limited as long as it can graft-polymerize with the hydrogenated block copolymer [D] to introduce an alkoxysilyl group into the hydrogenated block copolymer [D]. For example, a vinyltrialkoxysilane such as vinyltrimethoxysilane and vinyltriethoxysilane; an allyltrialkoxysilane such as allyltrimethoxysilane and allyltriethoxysilane; a vinylalkyldialkoxysilane such as dimethoxymethylvinylsilane and diethoxymethylvinylsilane; a p-styryltrialkoxysilane such as p-styryltrimethoxysilane; a (meth)acryloxytrialkoxysilane such as 3-acryloxypropyltrimethoxysilane, 3-acryloxypropyltriethoxysilane, 3-methacryloxypropyltrimethoxysilane and 3-methacryloxypropyltriethoxysilane; a (meth)acryloxyalkyldialkoxysilane such as 3-methacryloxypropylmethyldimethoxysilane and 3-methacryloxypropylmethyldiethoxysilane); and the like are suitably used. These ethylenically unsaturated silane compounds may be used either alone or in combination.

The ethylenically unsaturated silane compound is normally used in an amount of 0.1 to 10 parts by weight, preferably 0.2 to 5 parts by weight, and more preferably 0.3 to 3 parts by weight based on 100 parts by weight of the hydrogenated block copolymer [D].

As a peroxide, one having a one-minute half-life temperature of 170 to 190°C is preferably used. For example, t-butylcumyl peroxide, dicumyl peroxide, di-t-hexyl peroxide, 2,5-dimethyl-2,5-di(t-butylperoxy)hexane, di-t-butyl peroxide, di(2-t-butylperoxyisopropyl)benzene and the like are suitably used. These peroxides may be used either alone or in combination. The peroxide is normally used in an amount of 0.05 to 2 parts by weight, preferably 0.1 to 1 part by weight, and more preferably 0.2 to 0.5 part by weight based on 100 parts by weight of the hydrogenated block copolymer [D].

The method of reacting the hydrogenated block copolymer [D] with the ethylenically unsaturated silane compound in the presence of a peroxide is not particularly limited. For example, an alkoxysilyl group can be introduced into the hydrogenated block copolymer [D] by kneading a mixture including the hydrogenated block copolymer [D], an ethylenically unsaturated silane compound and a peroxide in a twin-screw kneader at a desired temperature for a desired time.

The temperature required for kneading with the twin-screw kneader is normally 180 to 220°C, preferably 185 to 210°C, and more preferably 190 to 200°C. In addition, the time required for heating and kneading is normally around 0.1 to 10 minutes, preferably around 0.2 to 5 minutes, and more preferably around 0.3 to 2 minutes. Kneading and extrusion may be continuously conducted so that the temperature and the time (detention time) required for heating and kneading are within the above range.

The form of the resulting modified hydrogenated block copolymer [E] is not limited, but the copolymer is normally formed into a form of pellet, into which additives can be subsequently blended.

The molecular weight of the modified hydrogenated block copolymer [E] is substantially the same as the molecular weight of the hydrogenated block copolymer [D] used as a raw material, because the alkoxysilyl group is introduced in a small amount. However, since the [E] is reacted with the ethylenically unsaturated silane compound in the presence of a peroxide, the crosslinking reaction and the cleavage reaction of the polymers concurrently occur, and the molecular weight distribution value of the modified hydrogenated block copolymer [E] becomes higher.

The molecular weight of the modified hydrogenated block copolymer [E] refers to a weight average molecular weight (Mw) in terms of polystyrene determined by GPC using THF as a solvent, and is normally 40,000 to 200,000, preferably 50,000 to 150,000, and more preferably 60,000 to 100,000.

In addition, its molecular weight distribution (Mw/Mn) is preferably 3.5 or less, more preferably 2.5 or less, and particularly preferably 2.0 or less. When the Mw and the Mw/Mn are within the above range, the heat resistance and the mechanical strength of the resin composition [F] and/or the sheet [G] including the composition according to one embodiment of the invention can be maintained.

### 4. Resin composition [F]

The resin composition [F] according to one embodiment of the invention is a resin composition [F] prepared by blending a metal oxide particulate having a function of shielding infrared ray at any region within a wavelength range of 800 to 2,000 nm and/or a near infrared-absorbing pigment into the hydrogenated block copolymer [D] and/or the modified hydrogenated block copolymer [E].

The resin sheet [G] including the resin composition [F] according to one embodiment of the invention has excellent heat insulation property by shielding infrared ray within a wavelength range of 800 to 2,000 nm.

### (Metal oxide)

The metal oxide particulate used for the resin composition [F] according to one embodiment of the invention has a function of shielding infrared ray at any region within a wavelength range of 800 to 2,000 nm.

Herein, "has a function of shielding infrared ray at any region within a wavelength range of 800 to 2,000 nm" means that "the metal oxide particulate to be used has a function of absorbing infrared ray at any region within a wavelength range of 800 to 2,000 nm to resultantly block infrared ray from penetration". The metal oxide particulates to be used may have a maximum absorption wavelength at any region within the wavelength range of 800 to 2,000 nm, or at any region out of the wavelength range of 800 to 2,000 nm.

Examples of the metal oxide particulate to be used include particulates of tin oxide, aluminum-doped tin oxide, indium-doped tin oxide, antimony-doped tin oxide, zinc oxide, aluminum-doped zinc oxide, indium-doped zinc oxide, gallium-doped zinc oxide, tin-doped zinc oxide, silicon-doped zinc oxide, titanium oxide, niobium-doped titanium oxide, tungsten oxide, sodium-doped tungsten oxide, cesium-doped tungsten oxide, thallium-doped tungsten oxide, rubidium-doped tungsten oxide, indium oxide; tin-doped indium oxide and the like. These metal oxide particulates may be used either alone or in combination.

The average particle diameter of the metal oxide particulate to be used is normally 0.001 to 0.2 µm, preferably 0.005 to 0.15 µm, and more preferably 0.01 to 0.1 µm. When the average particle diameter is within this range, the transparency at the visible light region can be maintained to provide a heat ray-shielding property.

In the resin composition [F] according to one embodiment of the invention, the metal oxide particulates are normally blended in an amount of 0.001 to 1.0 part by weight, preferably 0.002 to 0.5 part by weight, and more preferably 0.005 to 0.3 part by weight based on 100 parts by weight of the hydrogenated block copolymer [D] and/or the modified hydrogenated block copolymer [E]. When the blending amount is within this range, the transparency at the visible light region can be maintained to provide a heat ray-shielding property.

### (Near infrared-absorbing pigment)

The near infrared-absorbing pigment used for the resin composition [F] according to one embodiment of the invention has a function of shielding infrared ray at any region within a wavelength range of 800 to 2,000 nm.

Herein, "has a function of shielding infrared ray at any region within a wavelength range of 800 to 2,000 nm" means that "the near infrared-absorbing pigment to be used has a function of absorbing infrared ray at any region within a wavelength range of 800 to 2,000 nm to resultantly block infrared ray from penetration". The near infrared-absorbing pigment to be used may have a maximum absorption wavelength at any region within the wavelength range of 800 to 2,000 nm, or at any region out of the wavelength range of 800 to 2,000 nm.

Examples of the near infrared-absorbing pigment having a function of shielding infrared ray at any region within a wavelength range of 800 to 2,000 nm, used for the resin composition [F] according to one embodiment of the invention include:
a phthalocyanine compound such as 4,5-octakis(phenylthio)-3,6-{tetrakis(2,6-dimethylphenoxy)-tetrakis(n-hexylamino)}copper phthalocyanine, 4,5-octakis(phenylthio)-3,6- {tetrakis(2,6-dimethylphenoxy)- tetrakis(2-ethylhexylamino)}copper phthalocyanine, 4,5-octakis(4-chlorophenylthio)-3,6-{tetrakis(2,6-dimethylphenoxy)-tetrakis(n-hexylamino)}copper phthalocyanine, 4,5-octakis(2-methylphenylthio)-3,6- {tetrakis(2,6-dimethylphenoxy)-tetrakis(n-hexylamino)}copper phthalocyanine, 4,5-octakis(4-methoxyphenylthio)-3,6-{tetrakis(2,6-dimethylphenoxy)-tetrakis(n-hexylamino)}copper phthalocyanine, 4,5-octakis (phenylthio)-3,6-{tetrakis(2,6-dimethylphenoxy)-tetrakis (3-ethoxypropylamino)}copper phthalocyanine, 4,5-octakis(5-tert-butyl-2-methylphenylthio)-3,6- {tetrakis (2,6-dimethylphenoxy)-tetrakis(n-hexylamino)}copper phthalocyanine, 4,5-octakis(2,5-dichlorophenoxy)-3,6-{tetrakis(2,6-dimethylphenoxy)-tetrakis(DL-1-phenylethylamino)}vanadium oxide phthalocyanine, and 4,5- octakis(2,5-dichlorophenoxy)-3,6-{tetrakis(2,6-dimethylphenoxy)-tetrakis(benzylamino)} vanadium oxide phthalocyanine;
a naphthalocyanine compound such as vanadyl-5,14,23,32-tetrakis(4-nitrophenyl)-2,3-naphthalocyaninato, vanadyl-5,14,23,32-tetrakis(4-acetamidophenyl)-2,3-naphthalocyaninato, vanadyl-5,14,23,32-tetrakis(4-acetamidophenyl)-2,3-naphthalocyaninato, and tetraphenylthiotetrahexyl-1,2-naphthalocyanine vanadyloxy;
an immonium compound such as diimmonium compounds (N,N,N',N'-tetrakis{p-di(cyclohexylmethyl)aminophenyl}-p-phenylene diimmonium hexafluorophosphate, N,N,N',N'-tetrakis{p-di(n-propyl)aminophenyl}-p-phenylene diimmonium hexafluoroantimonate, N,N,N',N'-tetrakis{p-di(n-propyl)aminophenyl}-p-phenylene diimmonium tetrafluoroborate, and N,N,N',N'-tetrakis(p-di(iso-butyl)aminophenyl)-p-phenylene diimmonium);
a polymethine compound such as 5-anilino-2,3,3-trimethylindolenine, 5,5'-[(1,2-ethanediyl)bis(oxy)bis(3-methoxy-4,1-phenylene) bis(4-cyano-2,2-dimethyl-4-pentene-3-one)], 5,5'-[(1,3-propanediyl)bis(oxy)bis(3-methoxy-4,1-phenylene)bis(4-cyano-2,2-dimethyl-4-pentene-3-one)], 5,5'-[(1,4-butanediyl)bis(oxy)bis(3-methoxy-4,1-phenylene) bis(4- cyano-2,2-dimethyl-4-pentene-3-one)], 5,5'-[(1,5-pentanediyl)bis(oxy)bis(3-methoxy-4,1-phenylene)bis(4-cyano-2,2-dimethyl-4-pentene-3-one)], 5,5'-[(1,6-hexanediyl)bis(oxy)bis(3-methoxy-4,1-phenylene) bis(4-cyano-2,2-dimethyl-4-pentene-3-one)], and 5,5'-[(2-butene-1,4-diyl)bis(oxy)bis(3-methoxy-4,1-phenylene)bis(4-cyano-2,2-dimethyl-4-pentene-3-one)];
a diphenylmethane compound such as 2,3,4-trioctadecanoxybenzhydrol, [phenyl(2,3,4-trioctadecanoxyphenyl)methyl]amine, 4,4'-didocosoxybenzhydrol, di(4-docosoxyphenyl) methylamine, 4,4-di(12-docosoxydodecyloxy)benzhydrol, amino-bis[4-(12-docosoxydodecyloxy)phenyl]methane, N-benzyl-[bis(4-docosyloxyphenyl)]methylamine(4-methoxy-phenyl)-[4-(3,4,5-tris-octadecyloxy-cyclohexylmethoxy)-phenyl]-methanol, {(4-methoxy-phenyl)-[4-(3,4,5-tris-octadecyloxy-cyclohexylmethoxy)-phenyl]-methyl}-amine, and [bis-(4-docosoxy-phenyl)-methyl]-amine;
an anthraquinone compound such as 1,4-bis((ethenylphenyl)amino)-9,10-anthraquinone, 1,8-bis((ethenylphenyl)amino)-9,10-anthraquinone, 1-((ethenylphenyl)amino)-9,10-anthraquinone, 1-ethenylphenyl amino-4-hydroxy-9,10-anthraquinone, 1-((ethenylphenyl)amino)-4-((4-methylphenyl)amino)-9,10-anthraquinone, 1,4-bis((allyloxyethylphenyl)amino)-9,10-anthraquinone, 1-(allyloxymethylphenyl)amino-4-hydroxy-9,10-anthraquinone, 1-(allyloxyethylphenyl)amino-4-hydroxy-9,10-anthraquinone, 1-(4-(2-(allylaminocarbonyloxy)ethyl)phenylamino-4-hydroxyanthraquinone, and 1-(4-(2-methacryloyloxyethyl)phenyl)amino-hydroxy-9,10-anthraquinone;
a pentadiene compound such as 1,5-bis(4-N,N-dimethylaminophenyl)-1-p-tolylsulfonyl-2,4-trimethylene-2,4-pentadiene, 1,5-bis(4-N,N-dimethylaminophenyl)-1- phenylsulfonyl-2,4-trimethylene-2,4-pentadiene, 1,5-bis(4-N,N-dimethylaminophenyl)-3-p-tolylsulfonyl-2,4-trimethylene-1,4-pentadiene, 1,5-bis(4-N,N-dimethylaminophenyl)-3-phenylsulfonyl-2,4-trimethylene-1,4- pentadiene, 1,5-bis(4-N,N-diethylaminophenyl)-1-p-tolylsulfonyl-2,4-trimethylene-2,4-pentadiene, 1,5-bis(4-N,N-diethylaminophenyl)-3-p-tolylsulfonyl-2,4-trimethylene-1,4-pentadiene, 1,5-bis(4-N,N-dimethylamino-2-methylphenyl)-1-p-tolylsulfonyl-2,4-trimethylene-2,4-pentadiene, 1,5-bis(4-N,N-dimethylamino-2-methylphenyl)-3-p-tolylsulfonyl-2,4-trimethylene-1,4-pentadiene, 1,5-bis(4-N,N-dibutylaminophenyl)-1-p-tolylsulfonyl-2,4-trimethylene-2,4-pentadiene, 1,5-bis(4-N,N-dibutylaminophenyl)-3-p-tolylsulfonyl-2,4-trimethylene-1,4-pentadiene, and 1,5-bis(4-N,N-dibutylaminophenyl)-3-p-tolylsulfonyl-2,4-trimethylene-1,4-pentadiene;
an azomethine compound such as pyrrolopyrimidin-5-one-azomethine, pyrrolopyrimidin-7-one-azomethine and (2-hydroxy-N-(2'-methyl-4'-methoxyphenyl)-1-{[4-[(4,5,6,7-tetrachloro-1-oxo-2,3-dihydro-1H-isoindol-3-ylidene)amino] phenyl]azo}-11H-benzo[a]-carbazole-3-carboxyamide); a lanthanum hexaboride; and the like.

These near infrared-absorbing pigments can be used either alone or in combination.

In the resin composition [F] according to one embodiment of the invention, the near infrared-absorbing pigment is normally blended in an amount of 0.001 to 1.0 part by weight, preferably 0.002 to 0.7 part by weight, and more preferably 0.005 to 0.5 part by weight based on 100 parts by weight of the hydrogenated block copolymer [D] and/or the modified hydrogenated block copolymer [E]. When the blending amount is within this range, the transparency at the visible light region can be maintained to provide a heat ray-shielding property.

In the resin composition [F] according to one embodiment of the invention, it is preferred to blend the metal oxide particulate and the near infrared-absorbing pigment in combination, because infrared ray at a wide wavelength range of 800 to 2,000 nm can be shielded without significant lowering of the light transmittance at the visible light region.

### (Other compounding ingredients)

In the present invention, various additives which are generally blended into resins; can be blended into the resin composition [F]. Examples of the preferred additives include a softener for adjusting flexibility, reduction in adhesion temperature, adhesiveness with metals and the like, a UV absorber for shielding ultraviolet ray, an antioxidant and an antiblocking agent for enhancing the processability and the like, a light stabilizer for enhancing durability, and the like.

As the softener, a softener which can be homogeneously dissolved or dispersed in the hydrogenated block copolymer [D] and/or the modified hydrogenated block copolymer [E] is preferred, and a hydrocarbon-based polymer having a number average molecular weight of 300 to 5,000 is preferred.

Specific examples of the hydrocarbon-based polymer include a low-molecular-weight polymer such as polyisobutylene, polybutene, poly-4-methylpentene, poly-1-octene and ethylene/a-olefin copolymer, and a hydrogenated product thereof; a low-molecular-weight substance such as polyisoprene and polyisoprene/butadiene copolymer, and a hydrogenated product thereof; and the like.

The softener can be used either alone or in combination.

Above all, the low-molecular-weight hydrogenated polyisobutylene and the low-molecular-weight hydrogenated polyisoprene are preferred especially in that they can maintain transparency and light resistance and have an excellent softening effect.

The low-molecular-weight hydrocarbon-based polymer is normally blended in an amount of 20 parts by weight or less, and preferably 10 parts by weight or less based on 100 parts by weight of the hydrogenated block copolymer [D] and/or the modified hydrogenated block copolymer [E]. If the low-molecular-weight hydrocarbon-based polymer is blended in an larger amount, the flexibility can be increased when the polymer is used as an intermediate film for a laminated glass, but there is such a tendency that the heat resistance decrease and the eluate is likely to increase.

As the UV absorber, an oxybenzophenone-based compound, a benzotriazole-based compound, a salicylate ester-based compound, a benzophenone-based compound, a benzotriazole-based compound, a triazine-based compound and the like can be used.

As the antioxidant, a phosphorus-based antioxidant, a phenol-based antioxidant, a sulfur-based antioxidant and the like can be used. As the light stabilizer, a hindered amine-based light stabilizer and the like can be used.

The UV absorber, the antioxidant, the antiblocking agent, the light stabilizer and the like blended into the hydrogenated block copolymer [D] and/or the modified hydrogenated block copolymer [E] may be used either alone or in combination.

These additives is normally blended in an amount of 5 parts by weight or less, preferably 2 parts by weight or less, and more preferably 1 part by weight or less based on 100 parts by weight of the hydrogenated block copolymer [D] and/or the modified hydrogenated block copolymer [E].

For a method for producing the resin composition [F] according to one embodiment of the invention, a known method commonly used as a method for producing a resin composition can be applied. For example, a pellet of the hydrogenated block copolymer [D] and/or the modified hydrogenated block copolymer [E], a metal oxide particulate, a near infrared-absorbing pigment, and/or a dispersion of them in an appropriate solvent, and if necessary, other compounding ingredients may be uniformly mixed using a mixer such as a tumbler, a ribbon blender, a Henschel type mixer, and then melt-mixed by a continuous melt kneader such as a twin-screw extruder, and extruded into a pellet, and to thereby produce the resin composition [F].

Further, a resin composition containing a high concentration of a metal oxide particulate and/or a near infrared-absorbing pigment, and if necessary, other compounding ingredients (hereinafter, referred to as "master pellet [F₀]" in some cases) is prepared in the same manner as described above, and this master pellet [F₀] may be mixed with the pellets of the hydrogenated block copolymer [D] and/or the modified hydrogenated block copolymer [E], melt-mixed by a single-screw extruder, a twin-screw extruder or the like, and extruded into a pellet, and to thereby produce the resin composition [F].

### 5. Resin sheet [G]

The resin sheet [G] according to one embodiment of the invention is obtained by forming the resin composition [F] according to one embodiment of the invention into a sheet. When the resin sheet [G] according to one embodiment of the invention is disposed between two glass plates and integrally bonded via or without an adhesive to prepare a laminated glass, a light transmittance within a wavelength range of 800 to 2,000 nm is 50% or lower, preferably 40% or lower, and more preferably 30% or lower, and a light transmittance at a wavelength of 550 nm is 60% or higher, preferably 65% or higher, and more preferably 70% or higher.

The thickness of the resin sheet [G] is not particularly limited, and can be appropriately selected so as to provide the above-described light transmittances when it is formed into a laminated glass. The thickness of the resin sheet [G] is normally 0.1 to 3.0 mm, preferably 0.2 to 2.5 mm, and more preferably 0.3 to 2.0 mm.

A method for preparing the resin sheet [G] is not particularly limited, and a conventionally known forming method such as a melt extrusion method and a calendaring method can be applied. For example, in the case of forming the resin sheet [G] by a melt extrusion method, the resin temperature is appropriately selected in a range of normally 170 to 230°C, preferably 180 to 220°C, and more preferably 190 to 210°C. If the resin temperature is too low, the flowability is deteriorated, and the surface of the sheet [G] is likely to have defects such as orange-peel-like face and die line, and the extrusion speed cannot be increased, resulting in industrial disadvantage. If the resin temperature is too high, adhesiveness of the resin sheet [G] with the glass becomes poor, or the storage stability of the resin sheet [G] decreases, and thus defects such as decreased adhesiveness with the glass after storage of the resin sheet [G] at normal temperature (approximately 20°C) for a long period are likely to occur.

The surface of the resin sheet [G] can be a planar shape, an embossed shape or the like. Furthermore, in order to prevent blocking between the resin sheets [G], the sheets can be preserved in such a way that one side of the resin sheet [G] is overlapped with a release film.

### 6. Laminated glass

The laminated glass [H] according to one embodiment of the invention is a laminated glass prepared by integrally laminating at least two glass plates via at least one resin sheet [G]. In addition, an adhesion layer may be laminated between the glass plate and the resin sheet [G].

In the laminated glass [H], a light transmittance within a wavelength range of 800 to 2,000 nm is 50% or lower, preferably 40% or lower, and more preferably 30% or lower, and a light transmittance at a wavelength of 550 nm is 60% or higher, preferably 65% or higher, and more preferably 70% or higher.

In the laminated glass [H] according to one embodiment of the invention, each of the two or more glass plates to be used may be the same or different from each other in thickness, material and the like.

The thickness of the glass plate to be used is not particularly limited, but is normally about 0.5 to 10 mm. An ultrathin glass plate with a thickness of about 0.05 to 0.5 mm can be used. For example, glass plates with different thicknesses can be used so as to have a three-layer structure of a glass plate with a thickness of 2.1 mm / a resin sheet [G] with a thickness of 2.4 mm / a thin-film glass plate with a thickness of 0.5 mm.

Among the resin sheets [G], a resin sheet [G] including the resin composition [F] produced using the modified hydrogenated block copolymer [E] can be used as an intermediate film for a laminated glass without using an adhesive because of strong adhesiveness with the glass.

On the other hand, a resin sheet [G] including the resin composition [F] produced using the hydrogenated block copolymer [D] has weak adhesiveness with the glass, and when it is used as an intermediate film for a laminated glass, it is normally bonded to the glass via an adhesive.

Examples of the adhesive to be used include a resin sheet including the modified hydrogenated block copolymer [E] and a resin sheet [G] including the resin composition [F] produced using the modified hydrogenated block copolymer [E]. Further, an acrylic resin-based adhesive, an α-olefin-based adhesive, a urethane resin-based adhesive, an ethylene-vinyl acetate resin hot-melt adhesive, an epoxy resin-based adhesive, a cyanoacrylate-based adhesive, a silicone-based adhesive, a polyvinyl butyral resin-based adhesive and the like can be used.

Examples of the layer structure of the laminated glass using the adhesive include a five-layer structure of a glass plate with a thickness of 1.1 mm / a resin sheet including the modified hydrogenated block copolymer [E] with a thickness of 0.38 mm / a resin sheet [G] with a thickness of 2.0 mm / a resin sheet including a modified hydrogenated block copolymer [E] with a thickness of 0.38 mm / a glass plate with a thickness of 1.1 mm, and the like.

When the resin composition [F] is used as an intermediate film for a laminated glass, glass plates which individually have different thermal expansion coefficients can also be bonded together such that the resin composition [F] maintains flexibility in a wide temperature range from a low temperature region of about -50°C to a high temperature region of about +120°C, and thus crack of the glass can be reduced even when the temperature rapidly changes.

The material of the glass plate to be used is not particularly limited, and examples thereof include aluminosilicate glass, aluminoborosilicate glass, uranium glass, potash glass, silicate glass, crystallized glass, germanium glass, quartz glass, soda glass, lead glass, barium borosilicate glass, borosilicate glass and the like.

The method for producing the laminated glass is not particularly limited, and a method using an autoclave, a method using a vacuum laminator, and the like can be applied. Examples of the method include a method in which a first glass plate / the resin sheet [G] / a second glass plate are laminated in this order, put in a heat-resistant resin bag capable of depressurization, degasified, and then adhered with each other under heating and pressurization using an autoclave to produce a laminated glass, a method in which the components are adhered by vacuum pressure-bonding under heating using a vacuum laminator, and the like.

In the case of using the autoclave, the heating temperature is normally 120 to 150°C and the pressure is 0.3 to 1.1 MPa, and in the case of using the vacuum laminator, the heating temperature is normally 130 to 170°C and the pressure is 0.01 to 0.1 MPa.

The laminated glass according to one embodiment of the invention is characterized in that the resin sheet [G] including a resin composition [F] prepared by blending the metal oxide particulate and/or the near infrared-absorbing pigment having an infrared-shielding function into the hydrogenated block copolymer [D] and/or the modified hydrogenated block copolymer [E] with low hygroscopicity and low moisture transmittance is used. Therefore, even when used in a high temperature and high humidity environment, problems such as whitening of the resin sheet [G] rarely occur.

Since the laminated glass according to one embodiment of the invention has transparency at the visible light region and the shielding property at the infrared region, it can achieve both transparency and heat insulation property. Accordingly, it is useful as a window glass for buildings, a glass for roofs, a heat-insulating wall material for rooms, a glass for windscreen, side windscreen, rear windscreen, and sunroof for automobiles, a window glass for railway vehicles and ships, or the like.

In addition, since the resin sheet [G] including the resin composition [F] according to one embodiment of the invention has light transmittance and heat insulation property at the visible light region like a laminated glass, it is also useful as an agricultural sheet, a heat-insulating sheet for glass windows, a roof material for stadiums or the like.

### Examples

The present invention will be further described below by way of Examples in detail, but the present invention is not limited only to the following examples. Note that the units "parts" and "%" respectively refer to "parts by weight" and "wt%" unless otherwise indicated.

The evaluation in this example was carried out in accordance with the following method.

### (1) Weight average molecular weight (Mw) and molecular weight distribution (Mw/Mn)

The molecular weights of the block copolymer [C] and the hydrogenated block copolymer [D] were measured as a value expressed in terms of standard polystyrene determined by GPC by using a THF as a solvent at 38°C. As a measuring apparatus, HLC8020GPC manufactured by Tosoh Corporation was used.

### (2) Hydrogenation ratio

The hydrogenation ratios of the main chain, the side chain and the aromatic ring of the hydrogenated block copolymer [D] were calculated by measuring the ¹H-NMR spectrum.

### (3) Light transmittance

The light transmittances at the wavelengths of 550 nm and 800 to 2,500 nm were measured using a spectrophotometer (V-670, manufactured by JASCO Corporation).

### (4) Moisture resistance

In accordance with a test method JIS R 3212, a test piece of a planar laminated glass (length: 300 mm, width: 300 mm) was placed almost horizontally in a thermohygrostat bath at a temperature of 50°C with a relative humidity of 95% RH and preserved for 336 hours, and then its appearance change was visually evaluated.

As a result of the visual observation, a case where changes such as crack, expansion, peeling, discoloration, foaming, turbidity were not observed on the test piece was rated as "Good", a case where the test piece was free from crack, expansion and peeling, and discoloration, foaming and turbidity were, if observed, restricted to an area within 10 mm from the end of the test piece, was rated as "Allowable", and a case where crack, expansion and peeling were observed on the test piece, and any change of discoloration, foaming, turbidity and the like was observed at an inner area within not less than 10 mm from the end of the test piece, was rated as "Bad".

### (5) Heat resistance

A test piece of a planar laminated glass (length: 300 mm, width: 300 mm) were immersed in a vertical state in boiling water, maintained for 2 hours, and then its appearance change was visually evaluated.

A case where crack, foaming and other defects were not observed on the test piece was rated as "Good", a case where the test piece was free from crack, and foaming and other defects were, if observed, restricted to an area within 10 mm from the end of the test piece, was rated as "Allowable", and a case where crack was observed on the test piece, and any change of foaming and other defects was observed at an inner area within not less than 10 mm from the end of the test piece, was rated as "Bad".

### [Reference Example 1] Production of hydrogenated block copolymer [D1]

### (Production of block copolymer [C1])

550 parts of dehydrated cyclohexane, 25.0 parts of dehydrated styrene and 0.475 part of n-dibutyl ether were put in a reactor equipped with a stirrer whose inside had been sufficiently replaced by nitrogen. Subsequently, 0.88 part of cyclohexane solution containing 15% of n-butyllithium was added while stirring the whole content at 60°C to start polymerization, and furthermore the whole content was stirred at 60°C for 60 minutes. At this time, as a result of measuring the reaction solution by gas chromatography, the polymerization conversion ratio was 99.5%.

Subsequently, 50.0 parts of dehydrated isoprene was added to the reaction solution, and the stirring was continued at 60°C while maintaining the state for 30 minutes. At this time, the polymerization conversion ratio was 99.5%.

Subsequently, 25.0 parts of dehydrated styrene was further added to the reaction solution, and stirred at 60°C for 60 minutes. At this time, the polymerization conversion ratio was nearly 100%.

Herein, 0.5 part of ethyl alcohol was added to the reaction solution to terminate the reaction, to obtain a polymer solution. The resulting block copolymer [C1] had a weight average molecular weight (Mw) of 47,200, a molecular weight distribution (Mw/Mn) of 1.04, and w[a]:w[b] of 50:50.

### (Production of hydrogenated block copolymer [D1])

The polymer solution was transferred to a pressure-resistant reactor equipped with a stirrer, to which 8.0 parts of diatomaceous earth-supported nickel catalyst (product name: "E22U", carrying amount of nickel: 60%, manufactured by JGC Catalysts and Chemicals Ltd.) as a hydrogenation catalyst and 100 parts of dehydrated cyclohexane were added, and mixed. The inside of the reactor was replaced by hydrogen gas, to which hydrogen was further fed while stirring the solution, and hydrogenation reaction was continued at a temperature of 190°C under a pressure of 4.5 MPa for 6 hours. After the hydrogenation reaction, the hydrogenated block copolymer [D1] had a weight average molecular weight (Mw) of 49,900, and a molecular weight distribution (Mw/Mn) of 1.06.

After completion of the hydrogenation reaction, the reaction solution was filtered to remove the hydrogenation catalyst, and then 1.0 part of xylene solution prepared by dissolving 0.1 part of pentaerythrityl tetrakis[3-(3,5-di-t-butyl-4-hydroxyphenyl)propionate] (product name: "Songnox 1010", manufactured by KOYO Chemical Research Center) as a phenol-based antioxidant was added to the filtrate, and dissolved.

Subsequently, the above solution was filtered through a filter made of a metal fiber (pore diameter: 0.4 µm, manufactured by NICHIDAI CO.,LTD.) to remove fine solid contents. Subsequently, cyclohexane, xylene and other volatile components as solvents were removed from the solution using a cylindrical concentration dryer (product name: "Kontro", manufactured by Hitachi, Ltd.) at a temperature of 260°C under a pressure of 0.001 MPa or lower. The molten polymer was continuously extruded from the die in a strand form, cooled, and then 94 parts of a pellet of the hydrogenated block copolymer [D1] was obtained by a pelletizer. The resulting pelletized hydrogenated block copolymer [D1] had a weight average molecular weight (Mw) of 49,500, a molecular weight distribution (Mw/Mn) of 1.10, and a hydrogenation ratio of nearly 100%.

### [Reference Example 2] Production of modified hydrogenated block copolymer [E1]

To 100 parts of a pellet of the hydrogenated block copolymer [D1] obtained in Reference Example 1, 2.0 parts of vinyltrimethoxysilane and 0.2 part of 2,5-dimethyl-2,5-di(t-butylperoxy)hexane (product name: "PERHEXA (registered trademark) 25B" manufactured by NOF CORPORATION) were added to obtain a mixture. This mixture was kneaded using a twin-screw extruder at a resin temperature of 200°C with a detention time of 60 to 70 seconds, extruded in a strand form, air-cooled, and then cut by a pelletizer to obtain 93 parts of a pellet of the modified hydrogenated block copolymer [E1] having an alkoxysilyl group.

10 parts of a pellet of the resulting modified hydrogenated block copolymer [E1] was dissolved in 100 parts of cyclohexane, then poured into 400 parts of dehydrated methanol to coagulate the modified hydrogenated block copolymer [E1], and the coagulate was taken by filtration. The filtrate was vacuum-dried at 25°C to isolate 9.0 parts of a crumb of the modified hydrogenated block copolymer [E1].

As results of measuring FT-IR spectra for this product, new absorption bands were observed at 1090 cm⁻¹ attributed to a Si-OCH₃ group, and at 825 cm⁻¹ and 739 cm⁻¹ attributed to a Si-CH₂ group. In addition, a band attributed to vinyltrimethoxysilane was observed at an area other than the areas at 1075 cm⁻¹, 808 cm⁻¹ and 766 cm⁻¹. Furthermore, as a result of measuring the ¹H-NMR spectrum (in deuterated chloroform), an absorption band based on a proton of a methoxy group was observed at 3.6 ppm. From the peak area ratio, it was confirmed that 1.8 parts of vinyltrimethoxysilane bound to 100 parts of the hydrogenated block copolymer [D1].

### [Example 1] Production of resin composition [F1]

0.25 part of diimmonium salt compound-based near infrared-absorbing pigment (product name: "KAYASORB IRG-022", manufactured by Nippon Kayaku Co.,Ltd.) was added to 100 parts of the modified hydrogenated block copolymer [E1] produced in Reference Example 2, and mixed in a mixer. Using a twin-screw extruder equipped with a T die having a width of 300 mm (product name: "TEM-37B", manufactured by TOSHIBA MACHINE CO.,LTD.), this mixture was melt-kneaded under a condition of a cylinder temperature of 200°C and a screw rotation of 150 rpm, and extruded from the T die to prepare a resin sheet [G1] with a thickness of 760 µm including a resin composition [F1] in which a near infrared-absorbing pigment was blended into a modified hydrogenated block copolymer [E1].

A test piece with a length of 50 mm and a width of 50 mm was cut from the resulting sheet [G1]. The difference between the weights measured before and after immersion of the test piece in water at 23°C for 24 hours indicated that the water absorbability of the resin sheet [G1] was 0.01 %/24 hours.

### (Preparation of laminated glass [H1])

A test piece with a length of 300 mm and a width of 300 mm was cut from the resulting resin sheet [G1].

Subsequently, a test piece of the resin sheet [G1] was inserted between two blue glass plates having a thickness of 2.1 mm, a length of 300 mm and a width of 300 mm in each, and laminated. This laminate was put in a bag having a thickness of 75 µm made of NY (nylon)/PP (polypropylene), both sides of the bag were heat-sealed by a heat sealer while 200 mm width of the central portion on the bag opening was left without seal, and then the opening was heat-sealed while degassing the bag by using a sealed packing machine (BH-951, manufactured by Panasonic Corporation) to hermetically pack the laminate. Subsequently, the hermetically packed laminate was put in an autoclave and heat-pressed at a temperature of 140°C under a pressure of 0.8 MPa for 30 minutes to prepare a laminated glass [H1]-1.

Similarly, a laminated glass [H1]-2 having a thickness of 2.1 mm, a length of 70 mm and a width of 50 mm was also prepared for light transmittance measurement.

As a result of visually observing the prepared laminated glasses [H1]-1 and [H1]-2, abnormalities such as crack, expansion, peeling, discoloration, foaming or turbidity were not observed, and their appearances were good.

The light transmittance of the laminated glass [H1]-2 was measured at the wavelengths of 300 to 2,500 nm using a spectrophotometer. As a result, the glass showed light transmittances of 85% at 550 nm, 3% at 1,150 nm and 83% at 2,000 nm, and it was understood that the glass had good light transmittance at the visible region and sufficient light shielding property at the near infrared region.

In addition, as a result of evaluating the moisture resistance and the heat resistance using the laminated glass [H1]-1, the moisture resistance was rated as (Good), and the heat resistance was also rated as (Good).

### [Example 2] Production of resin composition [F2]

0.25 part of the same diimmonium salt compound-based near infrared-absorbing pigment as in Example 1 was added to 100 parts of the hydrogenated block copolymer [D1] produced in Reference Example 1 to prepare a sheet [G2] with a thickness of 760 µm including a resin composition [F2] prepared by blending the near infrared-absorbing pigment into the hydrogenated block copolymer [D1] in the same manner as Example 1.

Aside from this, a sheet [J2] with a thickness of 50 µm including the modified hydrogenated block copolymer [E1] was prepared in the same manner as Example 1 except that the near infrared-absorbing pigment was not blended.

The both water absorbabilities of the sheet [G2] and the sheet [J2] measured in the same manner as Example 1 were 0.01%/24 hours.

### (Preparation of laminated glass [H2])

Test pieces having a length of 300 mm and a width of 300 mm were cut from the resulting resin sheet [G2] and sheet [J2]. Subsequently, the test pieces were laminated between two blue glass plates having a thickness of 2.1 mm, a length of 300 mm and a width of 300 mm in each, in an order of the glass plate / the sheet [J2] / the sheet [G2] / the sheet [J2] / the glass plate. In the same manner as Example 1, this laminate was put in a bag having a thickness of 75 µm made of NY/PP, both sides of the bag were heat-sealed by a heat sealer while 200 mm width of the central portion on the bag opening was left without seal, and then the laminated glass [H2]-1 was prepared by using a sealed packing machine (BH-951, manufactured by Panasonic Corporation).

Similarly, a laminated glass [H2]-2 having a structure of the glass plate / the sheet [J2] / the sheet [G2] / the sheet [J2] / the glass plate for light transmittance measurement was also prepared.

As a result of visually observing the prepared laminated glasses [H2]-1 and [H2]-2, abnormalities such as crack, expansion, peeling, discoloration, foaming or turbidity were not observed, and their appearances were good.

The light transmittance of the laminated glass [H2]-2 was measured at the wavelengths of 300 to 2,500 nm using a spectrophotometer. As a result, the glass showed light transmittances of 84% at 550 nm, 3% at 1,150 nm and 82% at 2,000 nm, and the glass was found to have sufficient light transmittance at the visible region and sufficient light shielding property at the near infrared region.

In addition, as a result of evaluating the moisture resistance and the heat resistance using the laminated glass [H2]-1, the moisture resistance was rated as (Good), and the heat resistance was also rated as (Good).

### [Example 3] Production of resin composition [F3]

A sheet [G3] with a thickness of 760 µm including a resin composition [F3] in which a mid infrared-shielding agent was blended into the modified hydrogenated block copolymer [E1], was prepared in the same manner as Example 1, except that 0.2 part of antimony-doped tin oxide (ATO) particulate aqueous dispersion (average particle size: 40 nm, manufactured by SUMITOMO OSAKA CEMENT Co.,Ltd.) for shielding mid infrared ray was used instead of the near infrared-absorbing pigment.

The water absorbability of the sheet [G3] measured in the same manner as Example 1 was 0.01%/24 hours.

### (Preparation of laminated glass [H3])

The resulting sheet [G3] was cut into a test piece having a length of 300 mm and a width of 300 mm and a test piece having a length of 70 mm and a width of 50 mm to prepare a laminated glass [H3]-1 and a laminated glass [H3]-2 in the same manner as Example 1.

As a result of visually observing the prepared laminated glasses [H3]-1 and [H3]-2, abnormalities such as crack, expansion, peeling, discoloration, foaming or turbidity were not observed, and their appearances were good.

The light transmittance of the laminated glass [H3]-2 was measured at 300 to 2,500 nm using a spectrophotometer. As a result, the glass showed light transmittances of 79% at 550 nm, 49% at 1,150 nm and 2% at 2,000 nm, and the glass was found to have good light transmittance at the visible region and sufficient light shielding property at the mid infrared region.

In addition, as a result of evaluating the moisture resistance and the heat resistance using the laminated glass [H3]-1, the moisture resistance was rated as (Good), and the heat resistance was also rated as (Good).

### [Example 4] Production of resin composition [F4]

A sheet [G4] with a thickness of 760 µm including a resin composition [F4] in which a mid infrared-shielding agent was blended into the modified hydrogenated block copolymer [E1], was prepared in the same manner as Example 1, except that 0.003 part of lanthanum hexaboride (average particle size: 50 nm, manufactured by SUMITOMO METAL MINING CO.,LTD.) for shielding near infrared ray was used instead of the diimmonium salt compound-based near infrared-absorbing pigment used in Example 1.

The water absorbability of the sheet [G4] measured in the same manner as Example 1 was 0.01%/24 hours.

### (Preparation of laminated glass [H4])

The resulting sheet [G4] was cut into a test piece having a length of 300 mm and a width of 300 mm and a test piece having a length of 70 mm and a width of 50 mm to prepare a laminated glass [H4]-1 and a laminated glass [H4]-2 in the same manner as Example 1.

As a result of visually observing the prepared laminated glasses [H4]-1 and [H4]-2, abnormalities such as crack, expansion, peeling, discoloration, foaming or turbidity were not observed, and their appearances were good.

The light transmittance of the laminated glass [H4]-2 was measured at the wavelengths of 300 to 2,500 nm using a spectrophotometer. As a result, the glass showed light transmittances of 70% at 550 nm, 32% at 1,150 nm and 82% at 2,000 nm, and the glass was found to have good light transmittance at the visible region and sufficient light shielding property at the near infrared region.

In addition, as a result of evaluating the moisture resistance and the heat resistance using the laminated glass [H4]-1, the moisture resistance was rated as (Good), and the heat resistance was also rated as (Good).

### [Comparative Example 1] Resin composition [R1] using a modified ethylene/vinyl acetate copolymer

0.05 part of the same near infrared-absorbing pigment as used in Example 1 and 0.2 part of the same ATO particulate as used in Example 3 were mixed with 100 parts of a pellet of an ethylene/vinyl acetate copolymer (product name: " EVAFLEX (registered trademark) EV 150", vinyl acetate content: 33 wt%, melting point: 61°C, manufactured by DU PONT-MITSUI POLYCHEMICALS CO.,LTD.). To 100 parts of this mixture, 7.0 parts of triallyl isocyanurate, 1.0 part of 3-methacryloxypropyltrimethoxysilane (product name: "KBM-503", manufactured by Shin-Etsu Chemical Co., Ltd.) and 0.5 part of dicumyl peroxide (product name: "PERCUMYL D" manufactured by NOF CORPORATION) were added and mixed.

Using a twin-screw extruder equipped with the same T die as used in Example 1, this mixture was melt-kneaded under a condition of a cylinder temperature of 90°C and a screw rotation of 100 rpm, and extruded from the T die to prepare a sheet [S1] with a thickness of 760 µm including an ethylene/vinyl acetate copolymer resin composition [R1] containing a near infrared-absorbing pigment and a mid infrared-shielding particulate.

The water absorbability of the sheet [S1] measured in the same manner as Example 1 was 0.11%/24 hours.

### (Preparation of laminated glass [T1])

The resulting sheet [S1] was cut into a test piece having a length of 300 mm and a width of 300 mm and a test piece having a length of 70 mm and a width of 50 mm to prepare a laminated glass [T1]-1 and a laminated glass [T1]-2 in the same manner as Example 1 except that the temperature of the autoclave was 150°C.

As a result of visually observing the prepared laminated glasses [T1]-1 and [T1]-2, abnormalities such as crack, expansion, peeling, discoloration, foaming or turbidity were not observed, and their appearances were good.

The light transmittance of the laminated glass [T1]-2 was measured at the wavelengths of 300 to 2,500 nm using a spectrophotometer. As a result, the glass showed light transmittances of 71% at 550 nm, 27% at 1,150 nm and 2% at 2,000 nm, and the glass was found to have good light transmittance at the visible region and sufficient light shielding property at a near infrared region and a mid infrared region.

However, as a result of evaluating the moisture resistance and the heat resistance using the laminated glass [T1]-1, the test piece did not have crack, expansion, peeling, discoloration or foaming, but turbidity occurred in an area within about 20 mm from the end of the laminated glass, and thus the moisture resistance was rated as (Bad). On the other hand, in evaluation of the heat resistance, the test piece did not have crack, expansion, peeling, discoloration or foaming, furthermore turbidity occurred in an area within 10 mm from the end of the laminated glass, and thus the heat resistance was rated as (Allowable).

The results of these examples and comparative examples indicate the followings.

The laminated glass [H] prepared by using, as an intermediate film, the sheet [G] including the resin composition [F] obtained by blending the metal oxide particulate and/or the near infrared-absorbing pigment having a function of shielding infrared ray at any region within a wavelength range of 800 to 2,000 nm into the specific hydrogenated block copolymer [D] and/or modified hydrogenated block copolymer [E] within the scope of the present invention, has good light transmittance at the visible light, and sufficient light shielding property at the near infrared region and/or the mid infrared region, and good moisture resistance and heat resistance (Examples 1 to 4).

The laminated glass [T1] prepared by using, as an intermediate film, the sheet [S1] including the resin composition [R1] obtained by blending the metal oxide particulate and the near infrared-absorbing pigment into the EVA which is a resin having a higher water absorbability than that of the hydrogenated block copolymer [D] and/or modified hydrogenated block copolymer [E], has good light transmittance at the visible light and sufficient light shielding property at the near infrared region and/or the mid infrared region, but has poor moisture resistance (Comparative Examples 1).

### Industrial Applicability

One aspect of the invention can provide a laminated glass which is excellent in moisture resistance and heat resistance and has a heat insulating function by using, as an intermediate film for a laminated glass, the sheet [G] including the resin composition [F] prepared by blending the metal oxide particulate and/or the near infrared-absorbing pigment having a function of shielding infrared ray into the particular hydrogenated block copolymer [D] and/or modified hydrogenated block copolymer [E].

## Claims

1. A resin composition which is prepared by blending a total amount of 0.001 to 2.0 parts by weight of a metal oxide particulate and/or a near infrared-absorbing pigment having a function of shielding infrared ray at any region within a wavelength range of 800 to 2,000 nm, and 100 parts by weight of a hydrogenated block copolymer [D] and/or a modified hydrogenated block copolymer [E],
wherein the hydrogenated block copolymer [D] is obtained by hydrogenating 90% or more of carbon-carbon unsaturated bonds on a main chain and side chains and all unsaturated bonds of carbon-carbon unsaturated bonds on aromatic rings in a block copolymer [C] which is containing two or more polymer blocks [A] mainly containing a structural unit [a] derived from an aromatic vinyl compound and one or more polymer blocks [B] mainly containing a structural unit [b] derived from an acyclic conjugated diene compound, and
a ratio of w[a] to w[b] (w[a]:w[b]) is 30:70 to 60:40 when a weight fraction of a total amount of a structural unit [a] accounting for the block copolymer [C] is defined as w[a] and a weight fraction of a total amount of a structural unit [b] accounting for the block copolymer [C] is defined as w[b],and
the modified hydrogenated block copolymer [E] is obtained by introducing an alkoxysilyl group into the hydrogenated block copolymer [D].

2. The resin composition according to claim 1, wherein the metal oxide particulate having a function of shielding infrared ray is at least one selected from a group consisting of tin oxide, aluminum-doped tin oxide, indium-doped tin oxide, antimony-doped tin oxide, zinc oxide, aluminum-doped zinc oxide, indium-doped zinc oxide, gallium-doped zinc oxide, tin-doped zinc oxide, silicon-doped zinc oxide, titanium oxide, niobium-doped titanium oxide, tungsten oxide, sodium-doped tungsten oxide, cesium-doped tungsten oxide, thallium-doped tungsten oxide, rubidium-doped tungsten oxide, indium oxide and tin-doped indium oxide.

3. The resin composition according to claim 1 or 2, wherein the near infrared-absorbing pigment having a function of shielding infrared ray is at least one selected from a group consisting of a phthalocyanine compound, a naphthalocyanine compound, an immonium compound, a diimmonium compound, a polymethine compound, a diphenylmethane compound, an anthraquinone compound, a pentadiene compound, an azomethine compound and lanthanum hexaboride.

4. A laminated glass which is prepared by inserting a resin sheet comprising the resin composition according to any one of claims 1 to 3 as an intermediate film between glass plates and adhering laminates including the glass plates and the resin sheet to integrate them, which has a region having a light transmittance of 50% or lower at any region within a wavelength range of 800 to 2,000 nm, and a light transmittance at 550 nm is 60% or higher.
